# EUROPEAN PATENT SPECIFICATION

(11) **EP 2 724 798 B1**
(45) Date of publication and mention of the grant of the patent: **06.01.2016**
(21) Application number: 12007358.0
(22) Date of filing: 26.10.2012
(51) Int. Cl.: B21K 1/34, B60B 1/12, B60B 3/04, B60B 3/10

(54) **Method to produce a one piece hollowed spoke**
Verfahren zur Herstellung eines einstückigen hohlen Speichenrads
Procédé de fabrication d'un rayon creusé d'une seule pièce

(43) Date of publication of application: 30.04.2014
(73) Proprietor: Super Alloy Industrial Co., Ltd., 64064 Yun-Lin County (TW)
(72) Inventor: Chui, Chun Ming, Yunlin County 647 (TW)
(74) Representative: Fischer, Matthias

(56) References cited:
- EP-A1- 1 704 943
- EP-A1- 1 714 797
- EP-A2- 0 547 313
- US-A- 1 566 344
- US-A- 1 735 423

## Description

This invention is related to a method to produce a one piece hollowed spoke.

From the US 1,566,344 a metallic wheel for motor vehicles is known which comprises a frame in one piece of light metal having a good heat conduction and is constituted by a solid central part and spoke portions of arcuate cross-section.

The EP 0 547 313 A1 teaches a method for the production of an aluminium rim with a wheel disc comprising a plurality of hollow spokes in a permanent mould.

From the EP 1 714 797 A1 a method for manufacturing a light alloy automotive wheel having an annular hollow portion provided in an outer rim portion thereof, and a wheel manufactured by the method is known.

### Background and summary of the invention

This invention describes a method of manufacturing a one-piece hollowed spoke using the forging technique and principle of Hydraulics process to hollow the spoke and to model as one-piece. This research reaches the target of reducing weight, power saving and carbon reduction.

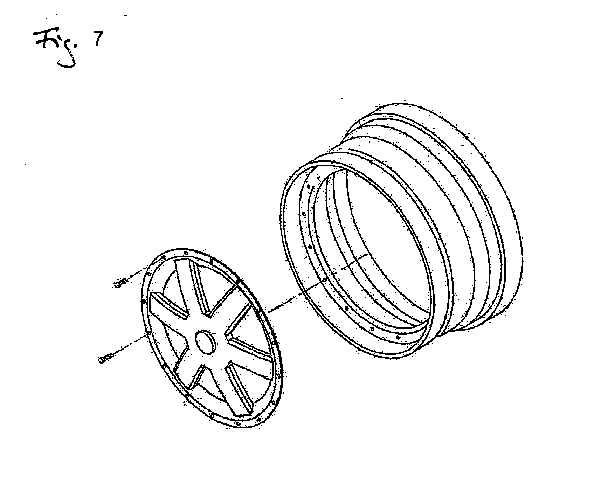

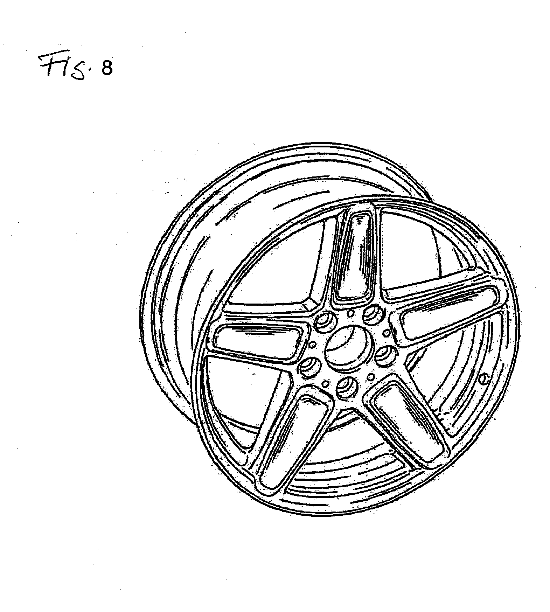

The general wheel could be separated into two kinds of design, the first is one-piece model and the other is the plurality one. Please see the Figs. 7 and 8.

The one-piece model has the advantages of the simple processing, stronger structure and the lower cost due to the construction of unibody of rim and spoke by forging or casting. The plurality model is specialized in the combination of multi-assembly methods for creating a stronger construction or reducing the weight of the wheel. However, the plurality model is higher cost than one-piece model in terms of manufacturing. To reduce the weight and the cost some wheel manufacturers hollow the internal part of the rim or the central area of the spoke.

### Detailed description of the invention

The two designs above are specialized on hollowing the spoke or the central part of wheels. Based on my personal research and study on the process and the construction of wheels I invented a method as defined in claim 1 to process a one-piece hollowed spoke which includes two advantages for the two designs as described previously.

With the procedure above the wheel with hollowed spoke would not only be able to finish as a one-piece model, but also able to be assembled on the system with bolts. This invention reduces the cost of the raw material and the weight of the system, which directly increases the effectiveness of power and is much friendlier to the environment at the same time.

The purpose of this invention is to offer a method of wheel process and the wheel itself, especially uses the forging technique and principle of Hydraulics process to hollow the spoke and to model as one-piece. This research reaches the target of reducing weight, power saving and carbon reduction.

From the research above, this invention could firmly achieve the goal to reduce the weight of the wheel assembly due to the hollowed spoke and to be more effective on saving fuel and reduces the emission of carbon dioxide. In addition, the disk for the purpose of connection for spokes in general wheels could also be removed by the implementation of this research in the process, which is a great cost down in raw materials.

### Process

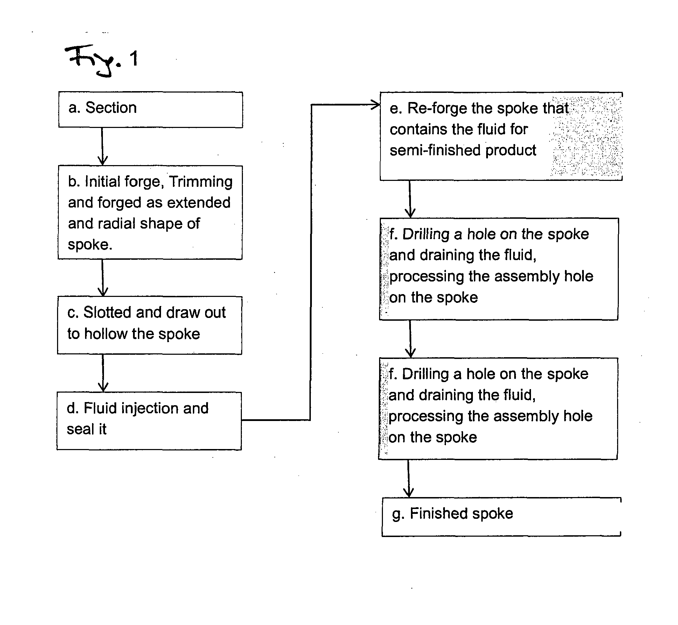

First of all, please refer to Fig. 1 to Fig. 5 which are related to the process of the manufacture of one-piece spoke.

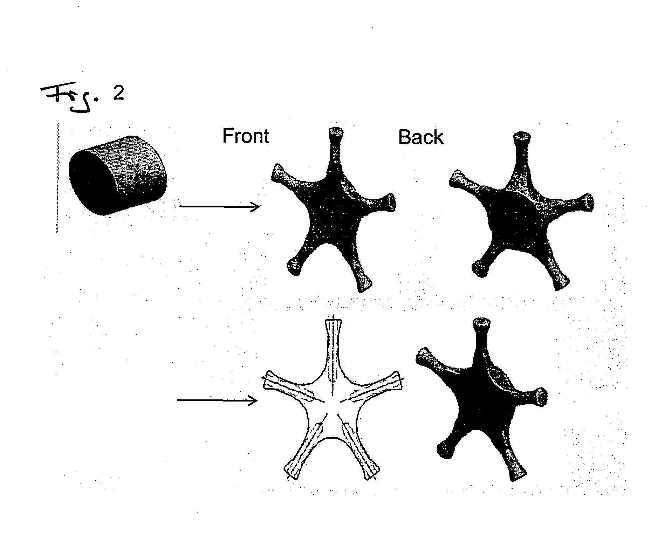

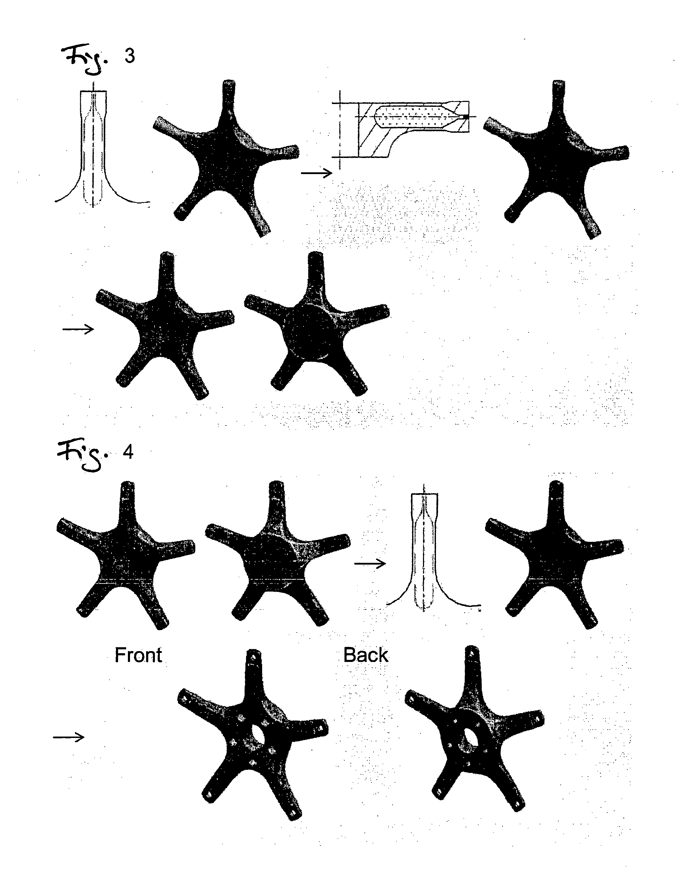

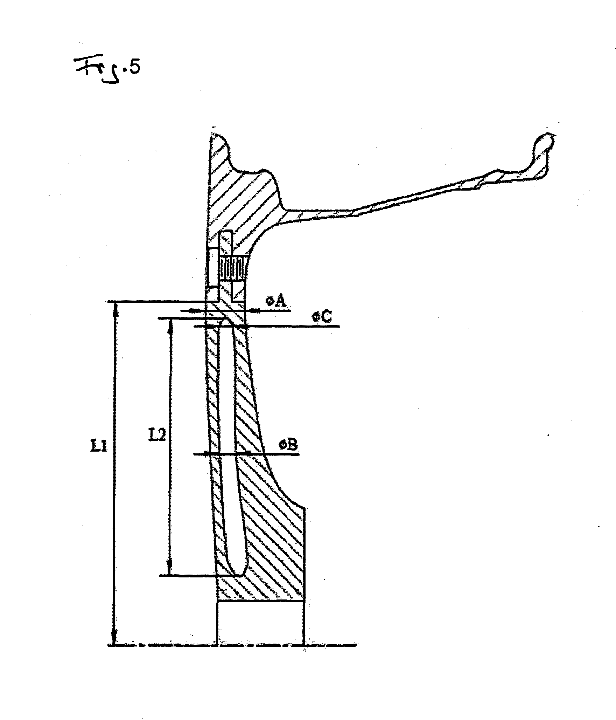

The steps are as follows:
1. The selection of workpiece: Selecting the material as aluminum, magnesium or aluminum-magnesium alloy.
2. The initial forge: With the work piece in the mould, and forged as extended and radial shape of spoke then fine forged the edge of the spoke. The spokes are star-shaped, asterisk-shaped, rudder-shaped, fan-shaped, sun-shaped and crystal-shaped. In this description, the wheel of star-shaped with five spokes is shown as example in the middle of Fig. 2.
3. Slotted and draw out: Slotting the spoke by the pre-analyzed measurement of depth and drawing out to hollow the spoke (please refer to Fig. 5). The measurement point from the outermost side of the spoke to the central part of the wheel sets as L1. The pre-analyzed measurement of slotted depth sets as L2. In addition, the measurement L1 should be larger than L2, and the depth of L2 should be at least set as one third of L1. After drawing out the diameter of the slot which approaches to the central part of the wheel would be widest and the diameter from the central part of the wheel to the penetration hole would be the narrowest. In general, the diameter of the spoke sets as A, and the diameter of the slot sets as B, however, the diameter from the slot to the point of drawing out sets as C. After all, the sequence of those figures from large to small is from A to C (as shown at the bottom of Fig. 2 and the top of Fig. 3).
4. Fluid injection: To open a small hole on the hollow spoke after drawing out and seal it after injecting the fluid into the spoke (shown in the middle of Fig. 3)
5. Further processing: Re-forging the spoke that contains the fluid for semi-finished product (shown at the bottom of Fig. 3).
6. Draining the fluid: Drilling a hole on the spoke and draining the fluid, processing the assembly hole on the spoke (shown as Fig. 4).

With the procedure above the wheel with hollowed spoke would not only be able to finish as a one-piece model, but also able to be assembled on the system with bolts. This invention reduces the cost of the raw material and the weight of the system, which directly increases the effectiveness of power and is much friendlier to the environment at the same time.

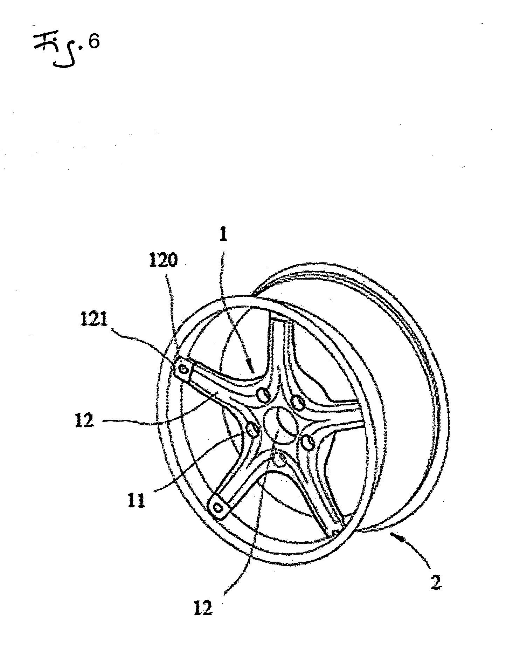

Please refer to Figs. 5 and 6 for schematic diagram and partial section profile of the assembly of the wheel with hollowed spoke on the rim according to this research. The spoke is one-piece model with numbers of spokes arranging orderly by a sequence of the default shape. The default shape would be star-shaped, asterisk-shaped, rudder-shaped, fan-shaped, sun-shaped and crystal-shaped. In the center of the spoke is a shaft hole with numbers of assembly hole for fixing with the axle. And the hollowed spokes assists to reduces weight of the wheel assembly. The information of the slot describes as follows: The measurement point from the outermost side of the spoke to the central part of the wheel sets as L1. The pre-analyzed measurement of slotted depth sets as L2. In addition, the measurement L1 should be larger than L2, and the depth of L2 should be at least set as one third of L1. After drawing out the diameter of the slot which approaches to the central part of the wheel would be widest and the diameter from the central part of the wheel to the penetration hole would be the narrowest. In general, the diameter of the spoke sets as A, and the diameter of the slot sets as B, however, the diameter from the slot to the point of drawing out sets as C. After all, the sequence of those figures from large to small is from A to C. There is one assembly end on the outermost side of the spoke, and the assembly end has been added a hole for bolt fixing on the rim. Besides, the diameter of hollowed spoke on the central part is the largest and the narrowest on the end of the assembly section with hole for bolt.

In general, we have learned that it is possible to reduce the cost of material in processing, increasing the effectiveness of power saving and reducing the emission of carbon dioxide by the implementation of the research. In addition, there is no publication or public use has been issued or addressed as yet.

### Brief description of the drawings

The manufacturing process flow chart of this invention.
a. Section 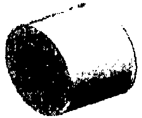
→ b. Initial forge, Trimming and forged as extended and radial shape of spoke. 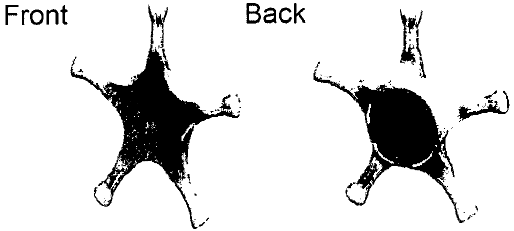
→ c. Slotted and draw out to hollow the spoke 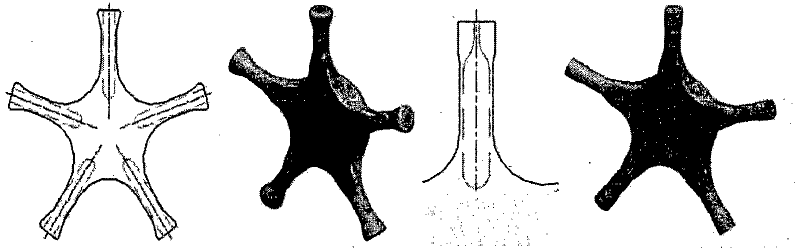
→ d. Fluid injection and seal it 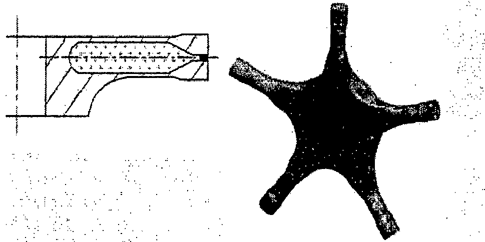
→ e. Re-forge the spoke that contains the fluid for semi-finished product 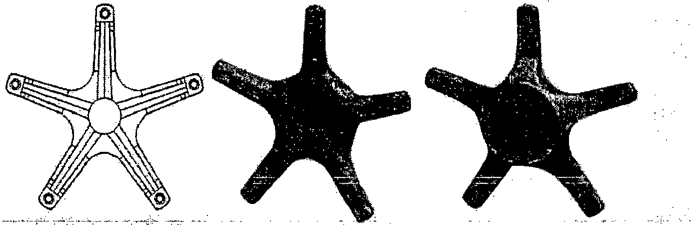
→ f. Drilling a hole on the spoke and draining the fluid, processing the assembly hole on the spoke 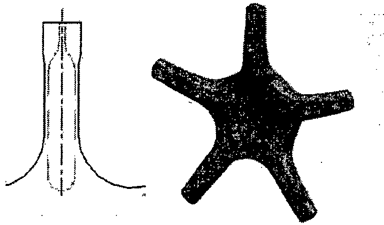 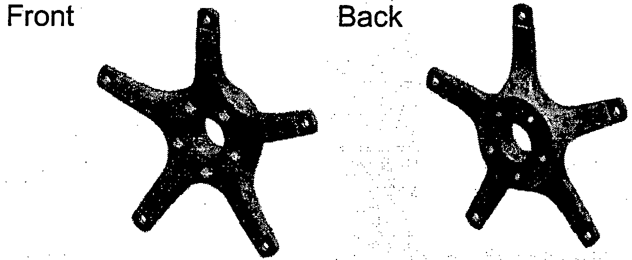
Assembly

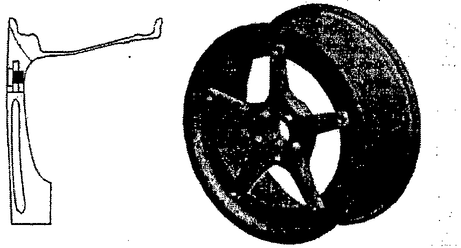

### [The main element Symbol Description]

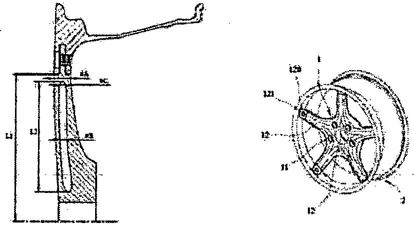

| | |
|---|---|
| Diameter of the rib | ψA |
| Diameter of the drilling hole | ψB |
| Diameter of the shrinking hole | ψC |
| Length of the rib from the outside to the body center | L1 |
| Depth of the drilling hole | L2 |
| Spoke | 1 |
| Rim | 2 |
| Center hole (pilot hole) | 10 |
| Bolt hole | 11 |
| Rib | 12 |
| Assembly hole | 120 |
| Assembly point | 121 |

## Claims

1. Method of manufacturing a one-piece hollowed spoke the method having the following steps:
a Selecting a work piece,
b Initially forging with the work piece being in a mould and forging as an extended and radial shape of a spoke,
c Slotting and drawing out by drilling and cutting the spoke as slotted and hollowing the spoke by shrinking,
d Injecting of fluid by opening a small hole on the hollow spoke after drawing out and sealing it after injecting the fluid into the spoke,
e Further processing by re-forging the spoke containing the fluid to a semi-finished product,
f Draining the fluid by drilling a hole on the spoke and draining the fluid, and processing the assembly hole on the spoke.

2. Method according to claim 1, wherein the step of initially forging includes all fine forged the edge of the spoke after the first punching for shaping.

3. Method according to claim 1, wherein the shape of spoke includes star-shaped, asterisk-shaped, rudder-shaped, fan-shaped, sun-shaped and crystal-shaped as well as the materials being selected from the group consisting of Aluminum, Magnesium or Aluminum-magnesium alloy.

4. Method according to claim 1, wherein after the step of slotting and drawing out the diameter of hollowed spoke on the central part is the largest and the narrowest on the end of the assembly section with hole for bolt is also addressed.

5. Method according to claim 1, wherein on the step of slotting and drawing out the measurement point from the outermost side of the spoke to the central part of the wheel sets as L1, the pre-analyzed measurement of slotted depth sets as L2 and the measurement L1 being larger than L2.

6. Method according to claim 5,
wherein on the step of slotting and drawing out the measurement L1 being larger than L2, and the depth of L2 being at least sets as one third of L1.

7. Method according to claim 1, wherein on the step of slotting the spokes the diameter of the spoke sets as A, and the diameter of the slot sets as B, wherein the diameter from the slot to the point of drawing out sets as C, and thereafter the sequence of those figures from large to small being from A to C.

## Patentansprüche

1. Verfahren zur Herstellung einer einteiligen ausgehöhlten Speiche, mit folgenden Schritten:
a) Auswählen eines Werkstücks,
b) anfängliches Stauchen, wo sich bei das Werkstück in einer Form befindet und Stauchen als ausgestreckte und radiale Form einer Speiche,
c) Schlitzen und Ausziehen der Speiche durch Bohren und Schneiden der Speiche im geschlitzten Zustand und Aushöhlen der Speiche durch Schrumpfen,
d) Injizieren eines Fluids durch Öffnen eines kleinen Lochs in der hohlen Speiche nach dem Ausziehen und Abdichten derselben, nachdem das Fluid in die Speiche injiziert wurde,
e) Weiterbehandeln zu einem Halbfertig-Erzeugnis durch Um-stauchen der Speiche, welche das Fluid enthält,
f) Entleeren des Fluids durch Bohren eines Lochs in die Speiche und Entleeren des Fluids, und Herstellen des Montagelochs an der Speiche.

2. Verfahren nach Anspruch 1, wobei der Schritt anfängliches Stauchen einschließt, dass alle Kanten der Speiche nach dem ersten Formstauchen fein gestaucht sind.

3. Verfahren nach Anspruch 1, wobei die Form der Speiche sternförmig, ruderförmig, schaufelförmig, sonnenförmig und kristallförmig ist und wobei die Materialien aus der Gruppe, welche aus Aluminium, Magnesium oder einer Aluminium-Magnesium-Legierung besteht, ausgewählt sind.

4. Verfahren nach Anspruch 1, wobei nach dem Schritt Schlitzen und Ausziehen der Durchmesser der ausgehöhlten Speiche im zentralen Teil am größten und am Ende des Montageabschnitts am engsten ist, wobei eine Bohrung für einen Bolzen auch angesprochen ist.

5. Verfahren nach Anspruch 1, wobei beim Schritt Schlitzen und Ausziehen das Maß von der äußersten Seite der Speiche zu dem zentralen Teil des Rades L1 ist, wobei das voranalysierte Maß der geschlitzten Tiefe L2 ist und wobei das Maß L1 größer ist als L2.

6. Verfahren nach Anspruch 5, wobei beim Schritt Schlitzen und Ausziehen das Maß L1 größer als L2 ist, und wobei die Tiefe von L2 wenigstens ein Drittel von L1 beträgt.

7. Verfahren nach Anspruch 1, wobei beim Schritt Schlitzen der Speichen der Durchmesser der Speiche A ist, und der Durchmesser des Schlitzes B ist, wobei der Durchmesser von dem Schlitz bis zu dem Punkt des Ausziehens C ist, und danach die Folge dieser Werte von groß zu klein derjenigen von A zu C entspricht.

## Revendications

1. Procédé de fabrication d'un rayon creusé d'une seule pièce comportant les étapes suivantes :
a. Sélectionner une pièce de travail ;
b. Dans un premier temps, forger la pièce dans un moule de manière à obtenir une forme étendue et radiale d'un rayon ;
c. Fendre et évider en perçant et coupant le rayon pour le fendre et creuser le rayon en rétrécissant ;
d. Injecter un fluide en ouvrant un petit trou dans le rayon creux après l'avoir évidé et le sceller après injection du fluide dans le rayon ;
e. Poursuivre le traitement en forgeant à nouveau le rayon contenant le fluide pour obtenir un produit semi-fini ;
f. Drainer le fluide en perçant un trou dans le rayon et drainant le fluide ; procéder au trou de montage sur le rayon.

2. Procédé selon la revendication 1 dans lequel l'étape initiale de forgeage comprend tout le forgeage fin du bord du rayon après la première perforation pour mettre en forme.

3. Procédé selon la revendication 1 dans lequel la forme du rayon comprend des formes d'étoiles, des formes d'astérisques, des formes de gouvernail, des formes en éventail, des formes de soleil et des formes de cristaux, ainsi que les matériaux sélectionnés dans un groupe composé d'aluminium, magnésium ou d'un alliage d'aluminium-magnésium.

4. Procédé selon la revendication 1 dans lequel, après l'étape consistant à fendre et évider, le diamètre du rayon creusé sur la partie centrale est le plus grand et le plus étroit sur l'extrémité de la section d'assemblage avec trou pour boulon.

5. Procédé selon la revendication 1 dans lequel lors de l'étape consistant à fendre et évider, le point de mesure entre le côté le plus éloigné du rayon et la partie centrale des ensembles de roues est L1, la mesure pré-analysée de la profondeur des fentes est L2 et la mesure L1 est plus importante que L2.

6. Procédé selon la revendication 5 dans lequel lors de l'étape consistant à fendre et évider, la mesure L1 est plus importante que L2 et la profondeur de L2 correspond à au moins un tiers de L1.

7. Procédé selon la revendication 1 dans lequel lors de l'étape consistant à fendre les rayons, le diamètre du rayon est A et le diamètre de la fente est B, le diamètre entre la fente et le point d'évidement étant C et ces chiffres allant du plus grand au plus petit de A à C.
